# EUROPEAN PATENT APPLICATION

(11) **EP 4 636 677 A1**
(43) Date of publication of application: **22.10.2025**
(21) Application number: 23926471.6
(22) Date of filing: 25.12.2023
(51) Int. Cl.: G06Q 50/04, G05B 19/418

(54) **CARBON DIOXIDE EMISSIONS COMPUTATION SYSTEM, METHOD THEREFOR, AND RECORDING MEDIUM FOR PROGRAM THEREFOR**

(30) Priority: 03.03.2023 JP 2023032912
(71) Applicant: KABUSHIKI KAISHA KOBE SEIKO SHO (KOBE STEEL, LTD.), Hyogo 651-8585 (JP)
(72) Inventor: UMEDA, Toyohiro, Kobe-shi, 651-2271 (JP)
(74) Representative: TBK
(86) International application number: PCT/JP2023/046486
(87) International publication number: WO 2024/185267

(57) **Abstract**

A carbon dioxide emission amount calculation system according to the present invention calculates CO₂ emission amounts in a plant including a plurality of facilities and configured to produce a product of a plurality of types through a plurality of steps. The system is configured to: calculate, as a total plant emission amount, a total CO₂ emission amount emitted in the plant in a predetermined period; calculate, as a total product emission amount, a total CO₂ emission amount emitted in the predetermined period in connection with production of the product completed in the predetermined period; and calculate, as a difference amount, a difference between the total plant emission amount and the total product emission amount, and allot the difference amount at a predetermined proportion to each type of the product or each of the facilities in the plant.

## Description

### Technical Field

The present invention relates to a carbon dioxide emission amount calculation system, a carbon dioxide emission amount calculation method, and a recording medium recording a carbon dioxide emission amount calculation program, to each calculate carbon dioxide emission amounts.

### Background Art

A carbon dioxide emission or discharge amount (CO₂ emission amount) has recently drawn attention from the viewpoint of global environmental conservation. For instance, Patent Literature 1 discloses a technology concerning such a carbon dioxide emission amount. Patent Literature 1 discloses a carbon traceability management system including: a utility management part that records and manages electric power received from outside, received cooling or warming energy amount, a private power generator actual operation performance, and a cooling and warming facility actual operation performance; a material management part that records and manages a material and a raw material actual use performance; a facility management part that manages and records a consumed energy amount of a facility during a period of production; a production execution management part that manages an actual production performance for a product; an emission amount calculation part that calculates a greenhouse effect gas emission amount from the actual performances recorded and managed respectively by the utility management part, the raw material management part, the facility management part, and the production execution management part; and an emission amount allotment part that allots the greenhouse effect gas emission amount calculated by the emission amount calculation part to production lots each representing an amount per product unit. A boiler, a power receipt facility, a private power generator, and a water supply are each classified as a primary powering facility. A powering facility that is activated by receiving supply of energy from the primary powering facility is classified as a secondary powering facility, and a non-powering facility that is activated by receiving supply of energy from the primary powering facility and the secondary powering facility is classified as a tertiary facility. The emission amount allotment part includes an emission amount management section that allots the greenhouse effect gas emission amount associated with each production lot, depending on a usage status of the tertiary facility associated with the production lot and on a usage status of the secondary facility associated with the production lot, and manages the greenhouse effect gas emission amount allotted to the production lot as data peculiar to the production lot.

The carbon traceability management system disclosed in Patent Literature 1 enables calculation of the greenhouse effect gas emission amount per production lot representing an amount per product unit in a production period. Unfortunately, a plant configured to produce a product of a plurality of types to be produced through a plurality of steps may undergo different steps depending on a type of the product. A certain product may be produced over a plurality of periods. This makes a total carbon dioxide emission amount about all the products completed in a recent period may differ from a total carbon dioxide emission amount in the whole of the plant in the recent period. The carbon traceability management system disclosed in Patent Literature 1 fails to presume this difference, and thus is unavailable.

### Citation List

### Patent Literature

Patent Literature 1: Japanese Patent Publication No. 5097728

### Summary of Invention

The present invention has been accomplished in view of the circumferences described above, and has an object of providing a carbon dioxide emission amount calculation system, a carbon dioxide emission amount calculation method, and a recording medium recording a carbon dioxide emission amount calculation program, to each achieve agreement between a total carbon dioxide emission amount about all products completed in a predetermined period and a total carbon dioxide emission amount in a whole of a plant in the predetermined period.

A carbon dioxide emission amount calculation system and a carbon dioxide emission amount calculation method according to the present invention aim at calculating CO₂ emission amounts in a plant including a plurality of facilities and configured to produce a product of a plurality of types through a plurality of steps. Each of the carbon dioxide emission amount calculation system and the carbon dioxide emission amount calculation method includes: calculating, as a total plant emission amount, a total CO₂ emission amount emitted in the plant in a predetermined period; calculating, as a total product emission amount, a total CO₂ emission amount emitted in the predetermined period in connection with production of the product completed in the predetermined period; and calculating, as a difference amount, a difference between the calculated total plant emission amount and the calculated total product emission amount, and allotting the calculated difference amount at a predetermined proportion to each type of the product or each of the facilities in the plant. A recoding medium according to the present invention is a non-transitory computer readable recording medium recording a program to cause a computer to serve as such a carbon dioxide emission amount calculation system.

The foregoing, and the object, features, and advantages of the present invention will be further clarified by the following detailed description and the accompanying drawings.

### Brief Description of Drawings

Fig. 1 is a diagram illustrating a configuration of a carbon dioxide emission amount calculation system in an embodiment.
Fig. 2 includes illustrations of example production step information tables.
Fig. 3 includes illustrations of example product actual production performance information tables.
Fig. 4 illustrates an example facility-related actual performance information table.
Fig. 5 illustrates an example raw material actual use performance information table.
Fig. 6 includes illustrations of example unit emission amount information tables.
Fig. 7 illustrates an example table for explanation of a way of calculating a facility CO₂ emission amount about a facility.
Fig. 8 illustrates an example table for explanation of a way of calculating a unit CO₂ emission amount per unit about the facility.
Fig. 9 includes illustrations of example tables for explanation of a CO₂ emission amount (a CO₂ emission amount in an associated step) for each type of product.
Fig. 10 illustrates an example table showing each CO₂ emission amount in Fig. 9 in a matrix format per facility for each type of product.
Fig. 11 illustrates an example table for explanation of a total plant emission amount, a total product emission amount, and a difference amount between the total emission amounts.
Fig. 12 illustrates an example table for explanation of a calculation way of allotting the difference amount to each type of product.
Fig. 13 is a flowchart showing an operation of the carbon dioxide emission amount calculation system.
Fig. 14 illustrates an example table for explanation of a calculation way of allotting a difference amount to each facility in a plant at a CO₂ emission amount ratio per type of product.
Fig. 15 illustrates an example table for explanation of a calculation way of allotting a difference amount to each facility in a plant.

### Description of Embodiments

Hereinafter, one or more embodiments of the present invention will be described with reference to the accompanying drawings. However, the present invention should not be limited to the disclosed embodiments. Elements denoted by the same reference numerals in the drawings have the same configuration and, therefore, repeated descriptions will be appropriately omitted. In the present specification, elements are denoted by a same reference numeral when being referred to collectively, and are denoted by a same reference numeral accompanied by a different respective reference character when being referred to individually.

A carbon dioxide emission amount calculation system according to an embodiment calculates carbon dioxide emission or discharge amount (CO₂ emission amounts) in a factory or plant including a plurality of facilities and configured to produce a product of a plurality of types through a plurality of steps. The carbon dioxide emission amount calculation system includes a total plant emission amount calculation part, a total product emission amount calculation part, and an allotment calculation part. The total plant emission amount calculation part calculates, as a total plant emission amount, a total CO₂ emission amount emitted in the plant in a predetermined period. The total product emission amount calculation part calculates, as a total product emission amount, a total CO₂ emission amount emitted in the predetermined period in connection with production of the product completed in the predetermined period. The allotment calculation part calculates, as a difference amount, a difference between the total plant emission amount calculated by the total plant emission amount calculation part and the total product emission amount calculated by the total product emission amount calculation part, and allots the calculated difference amount at a predetermined proportion to each type of the product or each of the facilities in the plant.

Hereinafter, the carbon dioxide emission amount calculation system, and a carbon dioxide emission amount calculation method and a recording medium for a carbon dioxide emission amount calculation program for the system will be described in more detail. Although a factory or plant configured to produce a rolled steel plate of various kinds will be described as an example here, any other factory or plant including a plurality of facilities and configured to produce a certain product of a plurality of types through a plurality of steps is adoptable. The carbon dioxide emission amount calculation system may include: an input and output terminal device that inputs and outputs data; one or more calculation processing devices (e.g., servers) that execute various kinds of arithmetic processing or calculations; and one or more database devices that store or manage various kinds of data, the devices being communicably connected to one another. The system may be established by integrating at least a part of: the input and output terminal device; the one or more calculation processing devices; and the one or more database devices, in such a manner as to be communicably connected to the remaining one or more devices. Here, the carbon dioxide emission amount calculation system will be described as a representative of a carbon dioxide emission amount calculation apparatus integrally including all the devices.

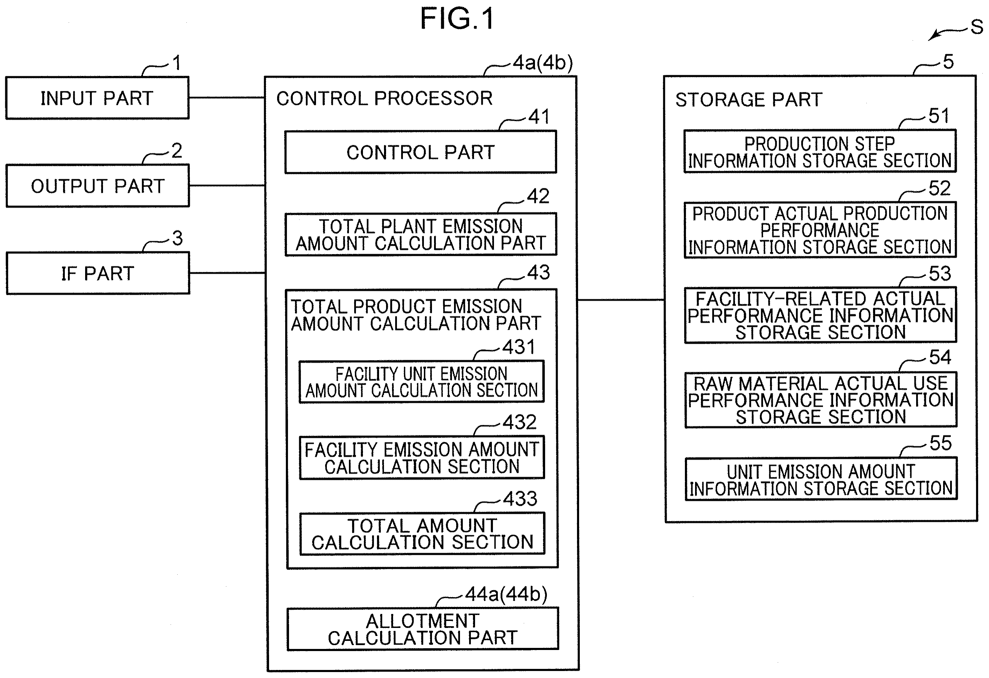

Fig. 1 is a diagram illustrating a configuration of a carbon dioxide emission amount calculation system in an embodiment.

Such a carbon dioxide emission amount calculation system (a carbon dioxide emission amount calculation apparatus serving as one example of the system) S in the embodiment includes, for example, an input part 1, an output part 2, an interface part (IF part) 3, a control processor 4a, and a storage part 5 as illustrated in Fig. 1.

The input part 1 is connected to the control processor 4a, and inputs, into the carbon dioxide emission amount calculation apparatus S, various kinds of commands, such as a command to instruct start of calculation of the CO₂ emission amount, and various data, such as a production step for a product and an actual production performance for a product, the data being required to activate the carbon dioxide emission amount calculation apparatus S. Examples of the input part include a keyboard, a mouse, and a plurality of input switches to which predetermined functions are assigned. The output part 2 is connected to the control processor 4a, and outputs the commands and data input from the input part 1, under the control by the control processor 4a. Examples of the output part include a display device, such as a cathode ray tube (CRT) display, a liquid crystal display (LCD), and an organic electroluminescence (EL) display, and a printing device, such as a printer.

Alternatively, the input part 1 and the output part 2 may constitute a touch screen. In the configuration of the touch screen, the input part 1 serves as, for example, a position input device of a resistive film type or an electrostatic capacitive type that detects and inputs an operation position, and the output part 2 serves as a display device. This touch screen is provided with the position input device on a display surface of the display device, and displays one or more input content candidates that can be input into the display device. When a user touches a display position where an input content desired to be input is displayed, the position input device detects the position, and the display content displayed at the detected position is input into the carbon dioxide emission amount calculation apparatus S as a user's operation input content. Such a touch screen allows the user to understand an input operation intuitively and easily. This results in making the carbon dioxide emission amount calculation apparatus S user-friendly.

For instance, the IF part 3 is a circuit that is connected to the control processor 4a and inputs and outputs data into and from an external device under the control by the control processor 4a, and is, for example, an interface circuit of RS-232C which is a serial communication way, an interface circuit using the Bluetooth (registered trademark) standard, or an interface circuit using a Universal Serial Bus (USB) standard. Alternatively, the IF part 3 may be a communication interface circuit that receives and sends a communication signal from and to an external device, e.g., a data communication card or a communication interface circuit conforming to the Institute of Electrical and Electronics Engineers (IEEE) 802. 11 standard.

The storage part 5 is a circuit that is connected to the control processor 4a and stores various predetermined programs and various kinds of predetermined data under the control by the control processor 4a. For instance, the various predetermined programs may be recorded in a recording medium, e.g., a CD-ROM or a DVD-R, and may be input into and stored in the storage part 5 from the recording medium via a drive device and the IF part 3.

The various predetermined programs include, for example, control processing programs. The control processing programs include, for example, a control program, a total plant emission amount calculation program, a total product emission amount calculation program, and an allotment amount calculation program. The control program is intended for execution of control of the parts 1 to 3 and 5 of the carbon dioxide emission amount calculation apparatus S in accordance with operability of these parts. The total plant emission amount calculation program is a program for calculating, as a total plant emission amount, a total CO₂ emission amount emitted in a plant in a predetermined period. The total product emission amount calculation program is a program for calculating, as a total product emission amount, a total CO₂ emission amount emitted in the predetermined period in connection with production of a product completed in the predetermined period. The allotment amount calculation program is a program for calculating, as a difference amount, a difference between the total plant emission amount calculated with the total plant emission amount calculation program and the total product emission amount calculated with the total product emission amount calculation program, and allots the calculated difference amount at a predetermined proportion to each type of the product or each of the facilities in the plant. The total product emission amount calculation program includes a facility unit emission amount calculation program, a facility emission amount calculation program, and a total amount calculation program. The facility unit emission amount calculation program is a program for calculating, for each of a plurality of facilities respectively associated with a plurality of steps in the production of the product completed in the predetermined period, a unit CO₂ emission amount per unit (first unit CO₂ emission amount per unit) about each of the facilities on the basis of a total production load amount required in the facility associated with the step to execute the step in the production in the predetermined period and a total CO₂ emission amount about the facility with respect to the total production load amount. The facility emission amount calculation program is a program for calculating, for each of the facilities respectively associated with the steps in the production of the product completed in the predetermined period, a facility CO₂ emission amount about the facility in connection with the production of the product completed in the predetermined period on the basis of the unit CO₂ emission amount per unit (first unit CO₂ emission amount per unit) about the facility calculated with the facility unit emission amount calculation program and the total production load amount required in the facility for the production in the predetermined period in connection with the production of the product completed in the predetermined period. The total amount calculation program is a program for calculating, as the total product emission amount, a sum total of each facility CO₂ emission amount about each of the facilities calculated with the facility emission amount calculation program for each of the facilities respectively associated with the steps in the production of the product completed in the predetermined period.

Examples of the various kinds of predetermined data include data necessary to execute each program, such as production step information, product actual production performance information, facility-related actual performance information, raw material actual use performance information, unit emission amount information, various calculation results in progress of calculations, and final calculation results.

The storage part 5 includes, for example, a read only memory (ROM) that is a nonvolatile storage element, an electrically erasable programmable read only memory (EEPROM) that is a rewritable nonvolatile storage element, or other storage element. The storage part 5 includes a random access memory (RAM) serving as a so-called working memory of the control processor 4a that stores data and the like generated in execution of the predetermined programs. The storage part 5 may include a hard disk device having a relatively large storage capacity.

The storage part 5 operatively includes a production step information storage section 51 to store the production step information, a product actual production performance information storage section 52 to store the product actual production performance information, a facility-related actual performance information storage section 53 to store the facility-related actual performance information, a raw material actual use performance information storage section 54 to store the raw material actual use performance information, and a unit emission amount information storage section 55 to store the unit emission amount information.

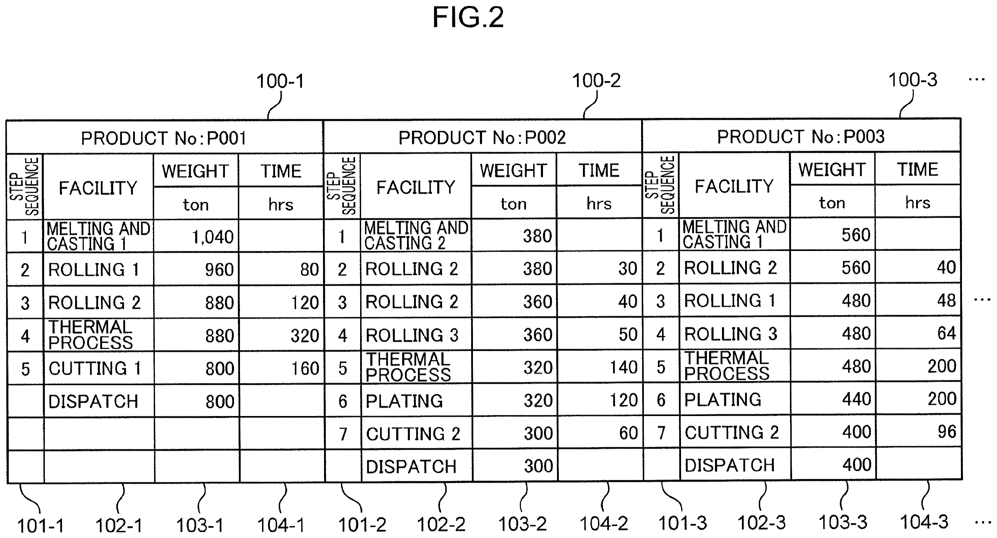

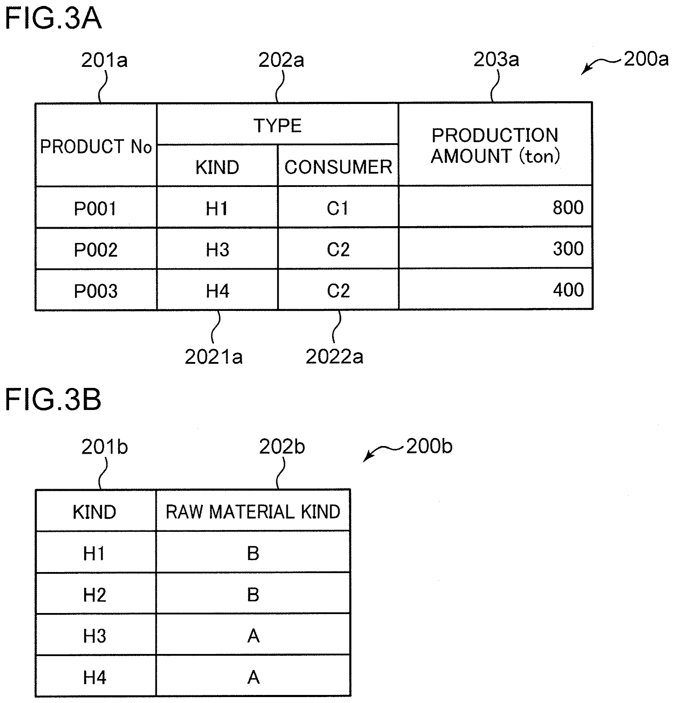

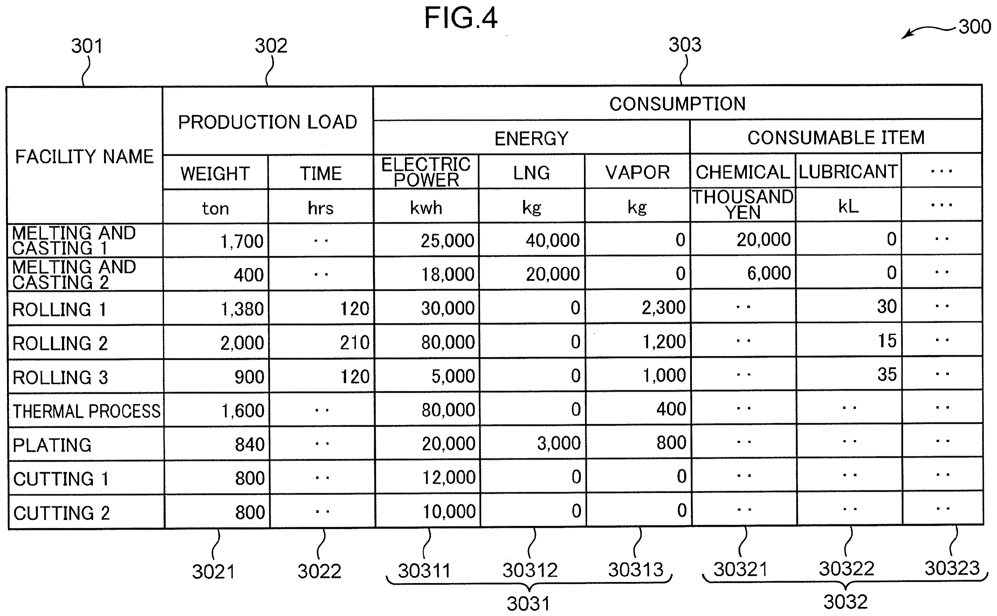

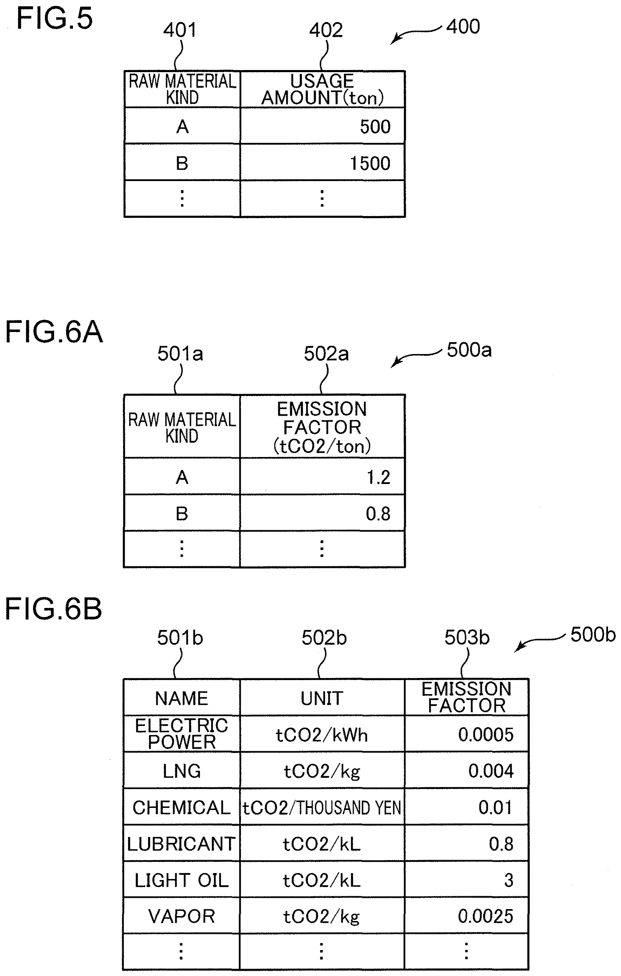

Fig. 2 includes illustrations of example production step information tables. Fig. 3 includes illustrations of example product actual production performance information tables. Fig. 3A illustrates a table showing a production amount per type of product. Fig. 3B illustrates a table showing a type (material kind) of a material per kind. Fig. 4 illustrates an example facility-related actual performance information table. Fig. 5 illustrates an example raw material actual use performance information table. Fig. 6 includes illustrations of example unit emission amount information tables. Fig. 6A illustrates a unit emission amount information table showing a unit CO₂ emission amount per unit for each kind of raw material. Fig. 6B illustrates a unit emission amount information table showing a unit CO₂ emission amount per unit for each kind of facility.

The production step information storage section 51 stores the production step information. The production step information includes information or data indicating a production step for a product for each type of product.

In the embodiment, the production step information storage section 51 stores the production step information in a table format. As illustrated in Fig. 2, for instance, a production step information table 100 (100-1, 100-2, 100-3, ...) having registration of the production step information includes a step sequence field 101 (101-1, 101-2, 101-3, ...) having registration of steps in a sequence, and a facility field 102 (102-1, 102-2, 102-3, ...) having registration of facilities used in execution of the steps in the sequence registered in the step sequence field 101, the table having a record for each step. Each facility indicates a facility associated with a specific step to execute the step, the facility being appropriately determined suitably for a product to be produced in a plant. In the embodiment, the plant is configured to produce a rolled steel plate of various kinds as described above. Thus, examples of the facility include a welding and casting facility, a rolling facility, a thermal process facility, and a cutting facility. One or more facilities of the same type may be provided.

In the embodiment, the production step information table 100 is defined to have registrations of various actual performances in respective steps for the product of the type. The production step information table 100 further includes a weight field 103 (103-1, 103-2, 103-3, ...) and a time field 104 (104-1, 104-2, 104b-3), the weight field having registration of a total produced object amount (an actual performance weight) for the product of the type completed in a predetermined period in each facility to execute each step in the sequence registered in the step sequence field 101, the time field having registration of a total usage time (a total operation time, an actual performance time) required in the facility to execute the step in the sequence registered in the step sequence field 101 in the production of the product of the type completed in the predetermined time period. The table further has a record of the registration of a dispatch amount (an actual dispatch amount, a production amount or an actual production amount) of the product of the type in the weight field 103. Here, in the embodiment, an actual performance value registered in the weight field 103 in the first step also represents a total amount of the raw material in connection with the production of the product of the type in the predetermined period. In the embodiment, a production load of each facility is expressed with at least one of a production amount of each produced object produced in the facility and a usage time of the facility. In this regard, the weight field 103 has registration of the production load in terms of the production amount of the produced object, and the time field 104 has registration of the production load in terms of the usage time.

Fig. 2 includes illustrations of the production step information tables 100-1, 100-2, and 100-3 respectively for the product with the product number "P001", the product with the product number "P002", and the product with the product number "P003". It is noted here that such a production step information table is prepared in advance for each type of product, and stored in the production step information storage section 51.

The product actual production performance information storage section 52 stores the product actual production performance information. The product actual production performance information includes information or data indicating a production amount of a product completed in a predetermined period for each type of product. The product actual production performance information is mainly used for calculation of a total product emission amount. Examples of the predetermined period include ten days, one month, and a half year to be appropriately preset by a user or operator.

In the embodiment, the product actual production performance information storage section 52 stores the product actual production performance information in a table format. For instance, as illustrated in Fig. 3A, a product actual production performance information table 200 having registration of the product actual production performance information includes a product number field 201a having registration of a product number, a type field 202a having registration of a type of a product with the product number registered in the product number field 201a, and a production amount field 203a having registration of a production amount of the product with the product number registered in the product number field 201 in the predetermined period, the table having a record for each product number or type of product. The product number represents an identifier to specify a type of product and identify the type of product. In the embodiment, for example, such a type of product is classified depending on a specification of product. Thus, each product number is also given for each type of product or each specification of product. In the embodiment, the specification of product is classified depending on a kind, and a consumer or an orderer. Accordingly, at receiving of a plurality of orders at different times for the same kind from the same consumer, the same product number is given to these orders and products produced in response to the orders are collected to one group. The "kind" in the example represents a name of a steel plate given and classified depending on a composition of the steel plate. The "kind" may result from classification further based on perspectives of strength of a product and a dimension of the product each influenced by a production step. In this respect, in the embodiment, the type field 202a includes a kind field or kind sub-field 2021a having registration of a kind, and a consumer field or consumer sub-field 2022a having registration of a consumer.

A sum total of respective production amounts registered in the production amount field 203 in the records is calculated to calculate a total amount of the product of each type produced in the plant in the predetermined period. In the example in Fig. 3, the total amount results in 1,500 (= 800 + 300 + 400) [ton].

The embodiment further incorporates a CO₂ emission amount about a raw material. The product actual production performance information storage section 52 further stores raw material kind information. The raw material kind information includes information or data indicating a raw material in connection with production of a product of a kind.

In the embodiment, the product actual production performance information storage section 52 stores the raw material kind information in a table format. As illustrated in Fig. 3B, for instance, a raw material kind information table 200b having registration of the raw material kind information includes a kind field 201b having registration of a kind, and a raw material field 202b having registration of a type of raw material (raw material kind) about a raw material in connection with production of a product of the kind registered in the kind field 201b, the table having a record for each kind.

The facility-related actual performance information storage section 53 stores the facility-related actual performance information. The facility-related actual performance information includes data indicating a total production load amount required in a facility in the plant and a consumption amount of a consumed item accompanied by an operation of the facility and accompanied by carbon dioxide emission in the predetermined period. The facility-related actual performance information is mainly used for calculation of the total plant emission amount. The consumption amount may include monetary consumption or expenses.

In the embodiment, the facility-related actual performance information storage section 53 stores the facility-related actual performance information in a table format. As illustrated in Fig. 4, for instance, a facility-related actual performance information table 300 having registration of the facility-related actual performance information includes: a facility name field 301 having registration of a facility name (name of a facility) representing an identifier to specify and identify a facility; a production load field 302 having registration of a total production load amount, in the predetermined period, in the facility with the facility name registered in the facility name field 301; and a consumption field 303 having registration of a consumption amount of a consumed item in the facility with the facility name registered in the facility name field 301. The table has a record for each facility or facility name. The production load field 302 includes sub-fields for a production load per unit, specifically, includes a weight field or weight sub-field 3021 having registration of a total production load amount expressed with a weight [ton] (a total produced object amount in each facility) about the production load and a time field or time sub-field 3022 having registration of a total production load amount expressed with a usage time [hrs] (a total usage time of the facility) about the production load. The consumption field 303 includes sub-fields per type of consumed item, specifically, includes an energy field or energy sub-field 3031 having registration of a consumption amount of energy consumed in operation of a facility and a consumable item field or consumable item sub-field 3032 having registration of a consumption amount of a consumable item used in the facility. The energy field 3041 further includes sub-fields per type of energy, specifically, includes an electric power field or electric power sub-field 30311 having registration of a consumption amount [kWh] of electric power, an LNG field or LNG sub-field 30312 having registration of a consumption amount [kg] of liquefied natural gas (LNG), and a vapor field or vapor sub-field 30313 having registration of a consumption amount [kg] of vapor. The consumable item field 3032 further includes sub-fields per type of consumable item, specifically, includes a chemical field or chemical sub-field 30321 having registration of a consumption amount of a chemical and a lubricant field or lubricant sub-field 30322 having registration of a consumption amount of lubricant.

Although the consumed item described above includes energy and consumable items, they are just examples. Other examples of the consumed item may include any item suitable for a type of plant and a type of facility, and include kerosene, refractory, a maintenance work, and industrial water.

The raw material actual use performance information storage section 54 stores the raw material actual use performance information. The raw material actual use performance information includes data indicating a usage amount of a raw material used in the plant in a predetermined period. The raw material actual use performance information is mainly used for calculation of the total plant emission amount.

In the embodiment, the raw material actual use performance information storage section 54 stores the raw material actual use performance information in a table format. For instance, as illustrated in Fig. 5, a raw material actual use performance information table 400 having registration of the raw material actual use performance information includes a raw material kind field 401 having registration of a raw material kind, and a usage amount field 402 having registration of a usage amount of the raw material of the raw material kind registered in the raw material kind field 401, the table having a record for each raw material kind.

The unit emission amount information storage section 55 stores the unit emission amount information. The unit emission amount information includes data indicating a unit CO₂ emission amount per unit or emission factor being a factor to convert actual performance values in the product actual production performance information, the facility-related actual performance information, and the raw material actual use performance information into CO₂ emission amounts.

In the embodiment, the unit emission amount information storage section 55 stores the unit emission amount information in a table format. For instance, as illustrated in Fig. 6A and Fig. 6B, the unit emission amount information table having registration of the unit emission amount information includes two unit emission amount information tables of the first and the second unit emission amount information tables 500a and 500b. The number of unit emission amount information tables may be determined appropriately, such as a single collective table, two tables, or three or more tables.

The first unit emission amount information table 500a has registration of a CO₂ emission amount per unit about a raw material, i.e., a second unit CO₂ emission amount per unit. For instance, as illustrated in Fig. 6A, the first unit emission amount information table 500a includes a raw material kind field 501a having registration of a raw material kind, and an emission factor field 502a having registration of the second unit CO₂ emission amount per unit about the raw material of the raw material kind registered in the raw material kind field 501a, the table having a record for each raw material kind.

The second unit emission amount information table 500b has registration of a CO₂ emission amount per unit (a third unit CO₂ emission amount per unit) about each kind, e.g., a CO₂ emission amount per unit about a consumed item (consumed item unit CO₂ emission amount) in the embodiment. For instance, as illustrated in Fig. 6B, the second unit emission amount information table 500b includes a name field 501b having registration of a name, such as a name of a consumed item, an emission factor field 503b having registration of the third unit CO₂ emission amount for the name registered in the name field 501b, and a unit field 502b having registration of a unit of the third unit CO₂ emission amount registered in the emission factor field 503b, the table having a record for each name.

The storage part 5 stores, in advance, these various kinds of data before start of calculation of the CO₂ emission amounts. The various kinds of data may be received through an input from: the input part 1; a storage medium, e.g., a USB memory, an SD card (registered trademark), or other medium, which stores the various kinds of data, via the IF part 3; a recording medium, e.g., a CD-R, a DVD-R, or other medium, which records the various kinds of data, via a driving device therefor and the IF part 3; and a management server that manages the various kinds of data via a communication network and the IF part 3. The actual performance values may be collected and received through an input from a facility via the communication network and the IF part 3.

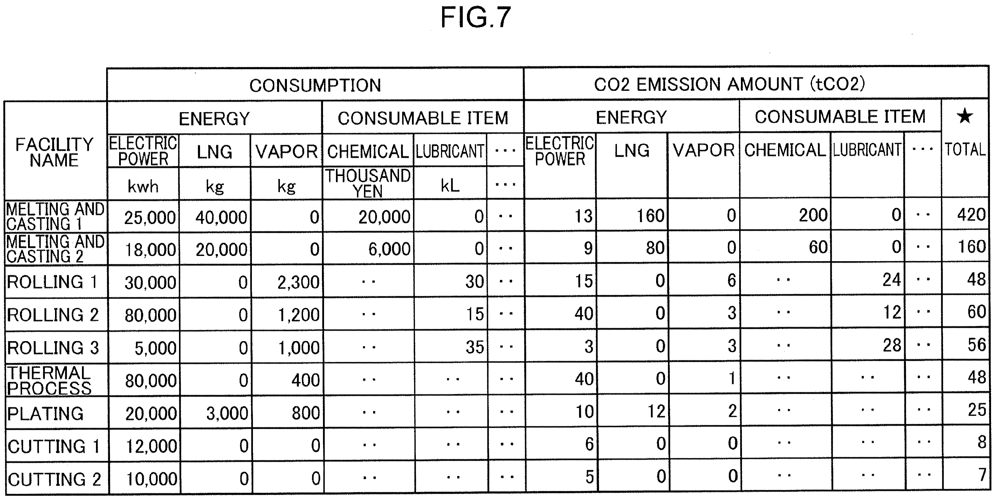

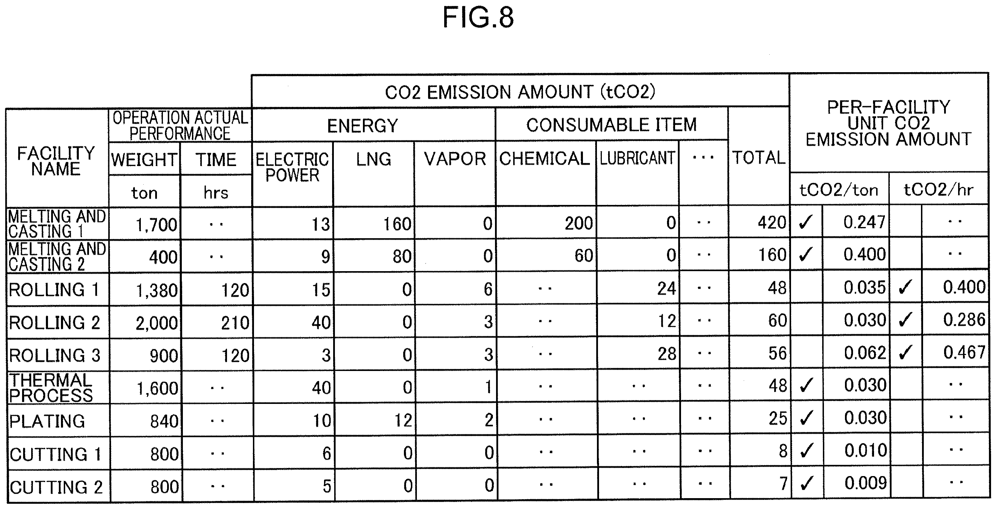

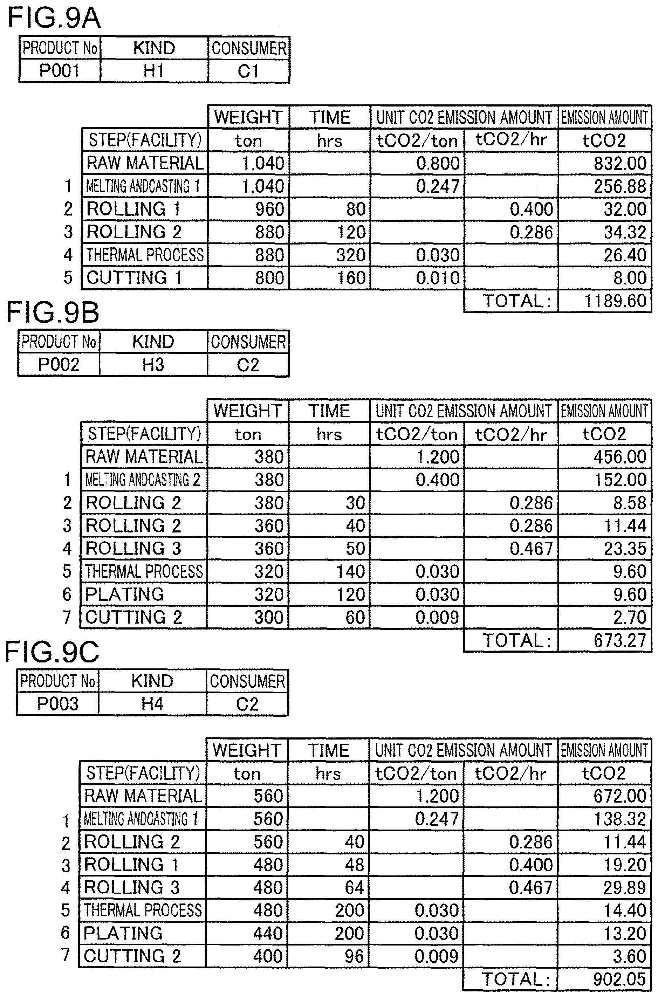

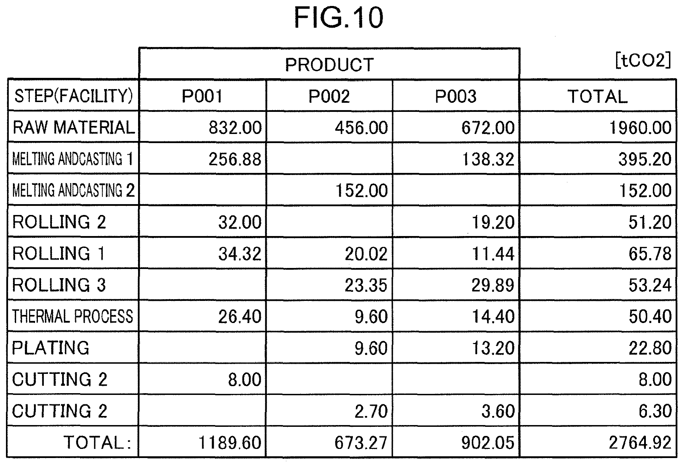

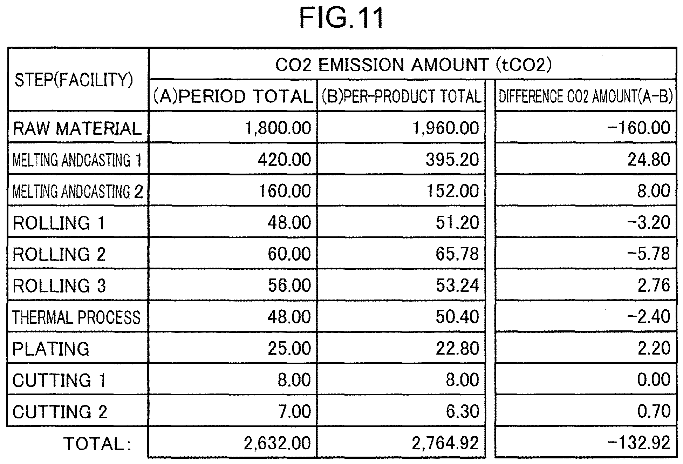

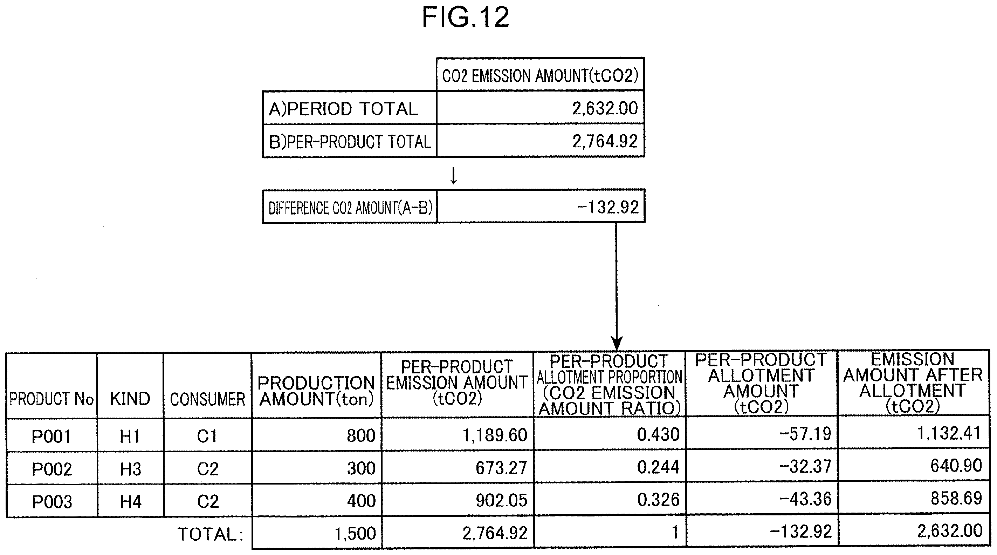

Fig. 7 illustrates an example table for explanation of a way of calculating a facility CO₂ emission amount about a facility. Fig. 8 illustrates an example table for explanation of a way of calculating a unit CO₂ emission amount per unit about the facility. Fig. 9 includes illustrations of example tables for explanation of a CO₂ emission amount (a CO₂ emission amount in an associated step) for each type of product. Fig. 9A is a table for the product with the product number "P001". Fig. 9B is a table for the product with the product number "P002". Fig. 9C is a table for the product with the product number "P003". Fig. 10 illustrates an example table showing each CO₂ emission amount in Fig. 9 in a matrix format per facility for each type of product. Fig. 11 illustrates an example table for explanation of a total plant emission amount, a total product emission amount, and a difference amount between the total emission amounts. Fig. 12 illustrates an example table for explanation of a calculation way of allotting the difference amount to each type of product.

Referring back to Fig. 1, the control processor 4a controls each of the parts 1 to 3, and 5 of the carbon dioxide emission amount calculation apparatus S in accordance with a function of each part, and serves as a circuit for calculating CO₂ emission amounts about a target product of a target type. The control processor 4a includes, for example, a central processing unit (CPU) and its peripheral circuits. The control processor 4a enables a control part 41, a total plant emission amount calculation part 42, a total product emission amount calculation part 43, and an allotment calculation part 44 to be operative in response to execution of the control processing programs. The total product emission amount calculation part 43 operatively includes a facility unit emission amount calculation section 431, a facility emission amount calculation section 432, and a total amount calculation section 433.

The control part 41 is intended for control of an entirety of the carbon dioxide emission amount calculation apparatus S through control of each of the parts 1 to 3 and 5 of the carbon dioxide emission amount calculation apparatus in accordance with operability of these parts.

The total plant emission amount calculation part 42 calculates, as a total plant emission amount, a total CO₂ emission amount emitted in a predetermined period. The total plant emission amount calculation part 42 calculates, as a per-facility emission amount for each of the facilities in the plant, a CO₂ emission amount emitted in the predetermined period in use of the facility, and calculates the total plant emission amount by calculating a sum total of a plurality of per-facility emission amounts as calculated. In the embodiment, the total plant emission amount calculation part 42 calculates the total plant emission amount by further incorporating at least one of a first total of CO₂ emission amounts about a raw material used in the plant in the predetermined period and a second total of CO₂ emission amounts emitted in the predetermined period in a predetermined process executed in association with the product.

Specifically, the total plant emission amount calculation part 42 calculates the total plant emission amount on the basis of the facility-related actual performance information stored in the facility-related actual performance information storage section 53 and the unit emission amount information stored in the unit emission amount information storage section 55. In the embodiment, for instance, the total plant emission amount further incorporates the first total of the CO₂ emission amounts about the raw material used in the plant in the predetermined period. The total plant emission amount calculation part 42 calculates the total plant emission amount on the basis of the facility-related actual performance information stored in the facility-related actual performance information storage section 53, the raw material actual use performance information stored in the raw material actual use performance information storage section 54, and the unit emission amount information stored in the unit emission amount information storage section 55.

More specifically, first, the total plant emission amount calculation part 42 calculates, for each of the facilities in the plant, a total CO₂ emission amount emitted in the facility in the predetermined period as a total plant facility emission amount. The total plant facility emission amount is calculated on the basis of a total consumed item amount about a consumed item accompanied by an operation of the facility and accompanied by carbon dioxide emission, and a third unit CO₂ emission amount per unit about the consumed item, in the predetermined period.

For instance, in a case where the facility is a facility with the facility name "melting and casting 1", the total plant emission amount calculation part 42 firstly takes out a consumption amount of a consumed item accompanied by an operation of the facility with the facility name "melting and casting 1" from the facility-related actual performance information stored in the facility-related actual performance information storage section 53. In the example in Fig. 4, the total plant emission amount calculation part 42 retrieves and selects a record having registration of the facility name "melting and casting 1" in the facility name field 301 from the facility-related actual performance information table 300 stored in the facility-related actual performance information storage section 53, and takes out a consumption amount of a consumed item registered in the consumption field 303 in the selected record. For instance, a consumption amount of electric power "25,000 [kWh]" is taken out, a consumption amount of LNG "40,000 [kg]" is taken out, and a consumption amount of a chemical "20,000 [thousand yen]" is taken out from the record of the name "melting and casting 1". Subsequently, the total plant emission amount calculation part 42 takes out the third unit CO₂ emission amount per unit about the consumed item accompanied by the operation of the facility with the facility name "melting and casting 1" from the unit emission amount information stored in the unit emission amount information storage section 55. In the example in Fig. 6B, the total plant emission amount calculation part 42 retrieves and selects records respectively having registration of "electric power", "LNG", and "chemical" in the name field 501b from the second unit emission amount information table 500b stored in the unit emission amount information storage section 55, and takes out each third unit CO₂ emission amount per unit and a relevant unit about each of the electric power, the LNG, and the chemical registered in each of the emission factor field 503b and the unit field 502b in each selected record. The second unit CO₂ emission amount of electric power (electric power unit CO₂ emission amount) "0.0005" [tCO2/kWh] is taken out, the second unit CO₂ emission amount of LNG (LNG unit CO₂ emission amount) "0.004" [tCO2/kg] is taken out, and the second unit CO₂ emission amount of chemical (chemical unit CO₂ emission amount) "0.01" [tCO2/thousand yen] is taken out. Then, as illustrated in Fig. 7, the total plant emission amount calculation part 42 obtains: a total CO₂ emission amount "13 [tCO2]" about the electric power by multiplying the consumption amount of electric power "25,000 [kWh]" by the electric power unit CO₂ emission amount "0.0005 [tCO2/kWh]"; a total CO₂ emission amount "160 [tCO2]" about the LNG by multiplying the consumption amount of LNG "40,000 [kg]" by the LNG unit CO₂ emission amount "0.004 [tCO2/kg]"; and a total CO₂ emission amount "200 [tCO2]" about the chemical by multiplying the consumption amount of chemical "20,000 [thousand yen]" by the chemical unit CO₂ emission amount "0.01 [tCO2/thousand yen]". In this example, the total CO₂ emission amount about the electric power is rounded off at the first decimal place. The total plant emission amount calculation part 42 obtains the total plant facility emission amount "420" [tCO2] about the facility with the facility name "melting and casting 1" by obtaining a sum or sum total of the total CO₂ emission amount "13" [tCO2] about the electric power, the total CO₂ emission amount "160" [tCO2] about the LNG, and the total CO₂ emission amount "200" [tCO2] about the chemical. It is noted here that the example shown in each of Fig. 4 and Fig. 7 omits illustration of a consumable item other than the chemical item in the facility with the facility name "melting and casting 1". The total plant facility emission amount is defined as "420" [tCO2] about the facility with the facility name "melting and casting 1" by incorporating a total O₂ emission amount about the omitted consumable item. The following amounts are obtained in the same manner: the total plant facility emission amount "160" [tCO2] about the facility with the facility name "melting and casting 2"; the total plant facility emission amount "48" [tCO2] about the facility with the facility name "rolling 1"; the total plant facility emission amount "60" [tCO2] about the facility with the facility name "rolling 2"; the total plant facility emission amount "56" [tCO2] about the facility with the facility name "rolling 3"; the total plant facility emission amount "48" [tCO2] with the facility name "thermal process"; the total plant facility emission amount "25" [tCO2] with the facility name "plating"; the total plant facility emission amount "8" [tCO2] about the facility with the facility name "cutting 1"; and the total plant facility emission amount "7" [tCO2] about the facility with the facility name "cutting 2".

Specifically, the total plant emission amount calculation part 42 calculates the total plant facility emission amount by calculating a sum or sum total of each plant facility emission amount calculated for each of the plurality of facilities in the plant. In the example in Fig. 7, the total plant emission amount calculation part 42 obtains a sum or sum total plant emission amount "832" [tCO2] by calculating the sum total of the following obtained amounts: the total plant facility emission amount "420" [tCO2] about the facility with the facility name "melting and casting 1"; the total plant facility emission amount "160" [tCO2] about the facility with the facility name "melting and casting 2"; the total plant facility emission amount "48" [tCO2] about the facility with the facility name "rolling 1"; the total plant facility emission amount "60" [tCO2] about the facility with the facility name "rolling 2"; the total plant facility emission amount "56" [tCO2] about the facility with the facility name "rolling 3"; the total plant facility emission amount "48" [tCO2] with the facility name "thermal process"; the total plant facility emission amount "25" [tCO2] with the facility name "plating"; the total plant facility emission amount "8" [tCO2] about the facility with the facility name "cutting 1"; and the total plant facility emission amount "7" [tCO2] about the facility with the facility name "cutting 2".

In the embodiment, for instance, the total plant emission amount further incorporates the first total of the CO₂ emission amounts about the raw material used in the plant in the predetermined period. Specifically, the total plant emission amount calculation part 42 calculates the first total of the CO₂ emission amounts about the raw material used in the plant in the predetermined period on the basis of the raw material actual use performance information stored in the raw material actual use performance information storage section 54 and the unit emission amount information stored in the unit emission amount information storage section 55, and further incorporates the calculated first total into the total plant emission amount. More specifically, the total plant emission amount calculation part 42 takes out a raw material kind and a usage amount thereof from the raw material actual use performance information stored in the raw material actual use performance information storage section 54, takes out, from the unit emission amount information, the second unit CO₂ emission amount per unit about the raw material corresponding to the taken out raw material kind, multiplies the usage amount by the second unit CO₂ emission amount per unit for each raw material kind, calculates a sum or sum total of results of the multiplication, and then incorporates the first total of the CO₂ emission amounts about the raw material. In the example shown in each of Fig. 5 and Fig. 6A, the raw material kind "A" and the usage amount thereof "500" [ton], and the raw material kind "B" and the usage amount thereof "1,500" [ton] are taken out from the raw material actual use performance information table 400. Further, the second unit CO₂ emission amount per unit "1.2" [tCO2/ton] about the raw material of the raw material kind "A" and the second unit CO₂ emission amount per unit "0.8" [tCO2/ton] about the raw material of the raw material kind "B" are taken out from the first unit emission amount information table 500a. Regarding the raw material of the raw material kind "A", a result of multiplication is obtained as "600" (= 500 × 1.2) [tCO2]. Regarding the raw material of the raw material kind "B", a result of multiplication is obtained as "1,200 (= 1,500 × 0.8) [tCO2]. The sum of the results of the multiplication "1,800" [tCO2] is obtained as the first total of the CO₂ emission amounts about the raw material. The total plant emission amount calculation part 42 obtains the total plant emission amount "2,632" [tCO2] by adding the amount "1,800" [tCO2] to the obtained amount "832" [tOC2]. Fig. 11 shows the calculation result in the column "(A) PERIOD TOTAL".

Referring back to Fig. 1, the total product emission amount calculation part 43 calculates, as a total product emission amount, a total CO₂ emission amount emitted in the predetermined period in connection with production of a product completed in the predetermined period.

The total product emission amount calculation part 43 calculates the total product emission amount on the basis of the production step information stored in the production step information storage section 51, the product actual production performance information stored in the product actual production performance information storage section 52, and the unit emission amount information stored in the unit emission amount information storage section 55. In the embodiment, for instance, the total plant emission amount further incorporates the first total of the CO₂ emission amounts about the raw material used in the plant in the predetermined period. Hence, the total product emission amount calculation part 43 calculates the total product emission amount on the basis of the production step information stored in the production step information storage section 51, the product actual production performance information stored in the product actual production performance information storage section 52, the raw material actual use performance information stored in the raw material actual use performance information storage section 54, and the unit emission amount information stored in the unit emission amount information storage section 55.

In the embodiment, the total product emission amount is calculated by the facility unit emission amount calculation section 431, the facility emission amount calculation section 432, and the total amount calculation section 433. In the embodiment, the total product emission amount calculation part 43 calculates the total product emission amount by further incorporating a third total of CO₂ emission amounts about the raw material in connection with the production of the product completed in the predetermined period when the total plant emission amount calculation part 42 calculates the total plant emission amount by incorporating the first total. The total product emission amount calculation part 43 calculates the total product emission amount by further incorporating a fourth total of CO₂ emission amounts emitted in the predetermined period in the predetermined process executed in association with the product completed in the predetermined period when the total plant emission amount calculation part 42 calculates the total plant emission amount by incorporating the second total. The total product emission amount calculation part 43 calculates the total product emission amount by further incorporating the third total and the fourth total when the total plant emission amount calculation part 42 calculates the total plant emission amount by incorporating the first total and the second total. In the example, the total plant emission amount calculation part 42 calculates the total plant emission amount by incorporating the first total. Hence, the total product emission amount calculation part 43 calculates the total product emission amount by further incorporating the third total of the CO₂ emission amounts about the raw material in connection with production of a product completed in the predetermined period.

The facility unit emission amount calculation section 431 calculates, for each of a plurality of facilities respectively associated with a plurality of steps in the production of the product completed in the predetermined period, a unit CO₂ emission amount per unit (first unit CO₂ emission amount per unit) about each of the facilities on the basis of a total production load amount required in the facility associated with the step to execute the step in the production in the predetermined period and a total CO₂ emission amount about the facility with respect to the total production load amount. In the embodiment, the facility unit emission amount calculation section 431 calculates, for each of the facilities respectively associated with the steps in the production of the product completed in the predetermined period, a total CO₂ emission amount about the facility with respect to the total production load amount required in the facility in the production in the predetermined period on the basis of a total consumed item amount of a consumed item accompanied by an operation of the facility and accompanied by carbon dioxide emission and on the basis of the third unit CO₂ emission amount per unit about the consumed item in the predetermined period.

For instance, the total production load amount is expressed with a total produced object amount in production in the facility. The facility unit emission amount calculation section 431 calculates, for each of the facilities respectively associated with the steps in the production of the product completed in the predetermined period, the first unit CO₂ emission amount per unit about the facility on the basis of a total produced object amount produced in the facility in the predetermined period and the total CO₂ emission amount about the facility with respect to the total produced object amount in the production. Alternatively, for example, the total production load amount is expressed with a total usage time of the facility. The facility unit emission amount calculation section 431 calculates, for each of the facilities respectively associated with the steps in the production of the product completed in the predetermined period, the first unit CO₂ emission amount per unit about each of the facilities on the basis of a total usage time required in the facility for the production in the predetermined period and the total CO₂ emission amount about the facility in use in the total usage time.

For instance, the facility unit emission amount calculation section 431 firstly takes out information about a product completed in the predetermined period from the product actual production performance information stored in the product actual production performance information storage section 52, and then takes out information about a plurality of facilities respectively associated with a plurality of steps in production of the product completed in the predetermined period and production loads thereof from the production step information stored in the production step information storage section 51. In the example in each of Fig. 2 and Fig. 3A, information about each of the product with the product number "P001", the product with the product number "P002", and the product with the product number "P003" is taken out as the product completed in the predetermined period. As illustrated in Fig. 8, information about the following facilities respectively associated with the steps in production of each of the product with the product number "P001", the product with the product number "P002", and the product with the product number "P003" and about the relevant production load thereof is taken out: the facility with the facility name "melting and casting 1" and the production load thereof "1,700" [ton]; the facility with the facility name "melting and casting 2" and the production load thereof "400" [ton]; the facility with the facility name "rolling 1" and the production load thereof "1,380" [ton], 120 [hrs]; the facility with the facility name "rolling 2" and the production load thereof "2,000" [ton], 210 [hrs]; the facility with the facility name "rolling 3" and the production load thereof "900" [ton], 120 [hrs]; the facility with the facility name "thermal process" and the production load thereof "1,600" [ton]; the facility with the facility name "plating" and the production load thereof "840" [ton]; the facility with the facility name "cutting 1" and the production load thereof "800" [ton]; and the facility with the facility name "cutting 2" and the production load thereof "800" [ton]. The example in each of Fig. 2, Fig. 3A, and Fig. 8 shows the production load "1,600" (= 1040 + 560) about the facility with the facility name "melting and casting 1". Fig. 2 and Fig. 3A omit illustration of another product completed in the predetermined period except for the product with the product number "P001", the product with the product number "P002", and the product with the product number "P003". The production load about the facility with the facility name "melting and casting 1" results in "1,700" [tCO2] by incorporating a production load about the facility with the facility name "melting and casting 1" in connection with production of the omitted product. This incorporation is applicable to other cases. Subsequently, the facility unit emission amount calculation section 431 calculates a total CO₂ emission amount about the facility with respect to a total produced object amount in the production by employing the same calculation way described with reference to Fig. 7. Fig. 8 shows the relevant calculation results. In a case where a total production load amount is expressed with the total produced object amount, the facility unit emission amount calculation section 431 calculates, for each of the facilities respectively associated with the steps in the production of the product completed in the predetermined period, the first unit CO₂ emission amount per unit about the facility by dividing the total CO₂ emission amount about the facility with respect to the total produced object amount in the production by the total produced object amount in the production in the facility in the predetermined period, i.e., (the first unit CO₂ emission amount per unit about the facility) = (the total CO₂ emission amount about the facility with respect to the total produced object amount in the production)/(the total produced object amount in the production in the facility in the predetermined period). For instance, the first unit CO₂ emission amount per unit about the facility with the facility name "melting and casting 1" results in 420 [tCO2]/1,700 [ton] = 0.247 as shown in Fig. 8. In a case where the total production load amount is expressed with the total usage time, the facility unit emission amount calculation section 431 calculates, for each of the facilities respectively associated with the steps in the production of the product completed in the predetermined period, the first unit CO₂ emission amount per unit about the facility by dividing the total CO₂ emission amount about the facility in use in the total usage time by the total usage time required in the facility for the production in the predetermined period, i.e., (the first unit CO₂ emission amount per unit about the facility) = (the total CO₂ emission amount about the facility in use in the total usage time)/(the total usage time required in the facility for the production in the predetermined period). For instance, the first unit CO₂ emission amount per unit about the facility with the facility name "rolling 1" results in 48 [tCO2]/120 [hr] = 0.4 as shown in Fig. 8. The sign "✔" indicates the first unit CO₂ emission amount per unit about the facility.

Referring to Fig. 8, for instance, respective second unit CO₂ emission amounts for the units [tCO2/ton] and [tCO2/hr] about the facility with the facility name "rolling 1" are calculated. Only one of the total amount and the total usage time may be taken out to be adopted for the second unit CO₂ emission amount per unit about the facility with the facility name "rolling 1", and the second unit CO₂ emission amount per unit for the taken out unit may be calculated. For instance, only the second unit CO₂ emission amount "0.4" [tCO2/hr] may be obtained for the facility with the facility name "rolling 1". A user or operator may appropriately preset as to which of the second unit CO₂ emission amounts at the units [tCO2/ton] and [tCO2/hrs] is adopted. For instance, the setting is made through an input from the input part 1 into the carbon dioxide emission amount calculation apparatus S, and the facility unit emission amount calculation section 431 calculates the second unit CO₂ emission amount at the set unit.

The facility emission amount calculation section 432 calculates, for each of the facilities respectively associated with the steps in the production of the product completed in the predetermined period, a facility CO₂ emission amount about the facility in connection with the production of the product completed in the predetermined period on the basis of the first unit CO₂ emission amount per unit about the facility calculated by the facility unit emission amount calculation section 431 and the total production load amount required in the facility for the production in the predetermined period in connection with the production of the product completed in the predetermined period. Fig. 9 shows a CO₂ emission amount per product and per facility. Fig. 9A shows a per-facility CO₂ emission amount about the product with the product number "P001". Fig. 9B shows a per-facility CO₂ emission amount about the product with the product number "P002". Fig. 9C shows a per-facility CO₂ emission amount about the product with the product number "P003". For instance, the CO₂ emission amount about the facility with the facility name "rolling 1" for the product with the product number "P001" results in 32 [tCO2] by multiplying the production load 80 [hr] by the first unit CO₂ emission amount per unit "0.4" [tCO2/hr] about the facility with the facility name "rolling 1". In Fig. 9, the per-facility CO₂ emission amount is expressed with a numerical value rounded off at the third decimal place. Then, the facility CO₂ emission amount about the facility is calculated as shown in Fig. 10 by calculating a sum or sum total for each facility from the CO₂ emission amount per product and per facility shown in Fig. 9A to Fig. 9C. For instance, regarding the facility with the facility name "rolling 2", the sum "65.78" of: the CO₂ emission amount "34.32" [tCO2] about the facility with the facility name "rolling 2" for the product with the product number "P001" shown in Fig. 9A; the CO₂ emission amount "20.02" (= 8.58 + 11.44) [tCO2] about the facility with the facility name "rolling 2" for the product number "P002" shown in Fig. 9B; and the CO₂ emission amount "11.44" [tCO2] about the facility with the facility name "rolling 2" for the product with the product number "P003" shown in Fig. 9C is obtained as the facility CO₂ emission amount about the facility with the facility name "rolling 2".

In the embodiment, each facility is associated with a certain step to execute the step as described above. In this respect, the CO₂ emission amount per product and per facility shown in each of Fig. 9A to Fig. 9C corresponds to a CO₂ emission amount per product and per step. The facility CO₂ emission amount about the facility with the facility name "rolling 1" corresponds to the step CO₂ emission amount about a step (rolling step by the rolling 1, i.e., rolling process by the rolling 1) associated with the facility with the facility name "rolling 1".

The total amount calculation section 433 calculates, as the total product emission amount, a sum total of each facility CO₂ emission amount about each of the facilities calculated by the facility emission amount calculation section 432 for each of the facilities respectively associated with the steps in the production of the product completed in the predetermined period. In the examples in Fig. 8 to Fig. 10, the total amount calculation section 433 obtains the total product emission amount "804.92" [tCO2] by obtaining a sum or sum total of the following obtained amounts of: the facility CO₂ emission amount "395.20" [tCO2] about the facility with the facility name "melting and casting 1"; the facility CO₂ emission amount "152" [tCO2] about the facility with the facility name "melting and casting 2"; the facility CO₂ emission amount "51.2" [tCO2] about the facility with the facility name "rolling 1"; the facility CO₂ emission amount "65.78" [tCO2] about the facility with the facility name "rolling 2"; the facility CO₂ emission amount "53.24" [tCO2] about the facility with the facility name "rolling 3"; the facility CO₂ emission amount "50.4" [tCO2] about the facility with the facility name "thermal process"; the facility CO₂ emission amount "22.80" [tCO2] about the facility with the facility name "plating"; the facility CO₂ emission amount "8" [tCO2] about the facility with the facility name "cutting 1"; and the facility CO₂ emission amount "6.30" [tCO2] about the facility with the facility name "cutting 2".

In the embodiment, the total plant emission amount further incorporates the first total of the CO₂ emission amounts about the raw material used in the plant in the predetermined period, as described above. Hence, the total amount calculation section 443 of the total product emission amount calculation part 43 calculates the total product emission amount by further incorporating the third total of the CO₂ emission amounts about the raw material in connection with production of the product completed in the predetermined period. Specifically, in the embodiment, an actual performance value registered in the weight field 103 in the first step in the production step information table 100 indicates a total amount of the material in connection with the production of the product in the predetermined period. The total amount calculation section 433 thus calculates the third total of CO₂ emission amounts about the raw material in connection with the production of the product completed in the predetermined period on the basis of the production step information table 100 stored in the production step information storage section 51, the product actual production performance information and the raw material kind information stored in the product actual production performance information storage section 52, and the unit emission amount information stored in the unit emission amount information storage section 55, and further incorporates the calculated third total into the total product emission amount.

More specifically, the total amount calculation section 433 firstly takes out information about a product completed in the predetermined period and a kind thereof from the product actual production performance information table 200a stored in the product actual production performance information storage section 52. In the example in Fig. 3A, the information about the product number "P001" with the kind "H1", the product number "P002" with the kind "H3", and the product number "P003" with the kind "H4" is taken out. Subsequently, the total amount calculation section 433 takes out, for each product completed in the predetermined period, the actual performance value registered in the weight field 103 in the first step in the production step information table 100 for the product as a total raw material amount. In the example in Fig. 2, the following amounts are taken out: the total raw material amount "1,040" [ton] for the product number "P001"; the total raw material amount "380" [ton] for the product number "P002"; and the total raw material amount "560" [ton] for the product number "P003". Next, the total amount calculation section 433 takes out, for each product completed in the predetermined period, information about a raw material of a specific kind for the product from the raw material kind information stored in the product actual production performance information storage section 52. In the examples in Fig. 3A and Fig. 3B, the information about the following kinds is taken out: the raw material kind "B" of the raw material for the product number "P001"; the raw material kind "A" of the raw material for the product number "P002"; and the raw material kind "A" of the raw material for the product number "P003". Then, the total amount calculation section 433 takes out, for each raw material kind, the second unit CO₂ emission amount per unit about the raw material of the raw material kind from the unit emission amount information stored in the unit emission amount information storage section 55. In the example in Fig. 6A, the second unit CO₂ emission amount per unit "1.2" [tCO2/ton] about the raw material of the raw material kind "A" and the second unit CO₂ emission amount per unit "0.8" [tCO2/ton] about the raw material of the raw material kind "B" are taken out. The total amount calculation section 433 calculates, for each product completed in the predetermined period, a CO₂ emission amount about a raw material for the product by multiplying the total raw material amount for the product by the second unit CO₂ emission amount per unit about the raw material for the product, and calculates a sum or sum total of each CO₂ emission amount about each product completed in the predetermined period, and then calculates the third total of the CO₂ emission amounts about the raw material. In the example, the following amounts are obtained: the CO₂ emission amount "832" (= 1,040 [ton] × 0.8 [tCO2/ton]) [tCO2] about the raw material for the product with the product number "P001"; the CO₂ emission amount "456" (= 380 [ton] × 1.2 [tCO2/ton]) [tCO2] about the raw material for the product with the product number "P002"; and the CO₂ emission amount "672" (= 560 [ton] × 1.2 [tCO2/ton]) [tCO2] about the raw material for the product with the product number "P003". The sum "1,960"[tCO2] of the amounts is obtained as the third total. The total amount calculation section 433 obtains the total product emission amount "2,764.92" [tCO2] by adding the third total "1,960" [tCO2] to the obtained amount "804.92" [tCO2]. Fig. 11 shows the calculation result in the column "(B) PER-PRODUCT TOTAL".

Referring back to Fig. 1, the allotment calculation part 44a calculates, as a difference amount, a difference between the total plant emission amount calculated by the total plant emission amount calculation part 42 and the total product emission amount calculated by the total product emission amount calculation part 43, and allots the calculated difference amount at a predetermined proportion to each type of the product or each of the facilities in the plant. In the embodiment, for example, the allotment calculation part 44a allots the calculated difference amount at the predetermined proportion to each type of the product through allotment of the calculated difference amount at a CO₂ emission amount ratio per type of the product.

For instance, in the example, as illustrated in Fig. 12, the allotment calculation part 44a firstly obtains the difference amount "-132.92" [tCO2] between the total plant emission amount "2,632" [tCO2] obtained by the total plant emission amount calculation part 42 and the total product emission amount "2,764.92" [tCO2] obtained by the total product emission amount calculation part 43. Subsequently, the allotment calculation part 44a calculates a CO₂ emission amount ratio per product for each product completed in the predetermined period. For instance, regarding the product with the product number "P001", a sum or sum total "1,189.6" (= 832 + 256.88 + 32 + 34.32 + 26.4 + 8) [tCO2] of each facility CO₂ emission amount obtained for each of the facilities associated with the steps in the production of the product is obtained. The resultant amount is divided by the total product emission amount "2,764.92" [tCO2] to obtain the CO₂ emission amount ratio "0.43" for the product with the product number "P001". The allotment calculation part 44a calculates, for each product completed in the predetermined period, the allotment amount to be allotted to each product by multiplying the calculated difference amount by the CO₂ emission amount ratio per product, and incorporates the calculated allotment amount for the product. It is noted that the "incorporation" here means "addition" when the allotment amount has a positive value, and means "subtraction" when the allotment amount has a negative value. For instance, regarding the product with the product number "P001", the difference amount "-132.92" [tCO2] is multiplied by the CO₂ emission amount ratio "0.43" per the product with the product number "P001" to obtain the allotment amount "-57.19" [tCO2] for the product with the product number "P001", and the obtained allotment amount is incorporated into the CO₂ emission amount "1,189.6" [tCO2] about the product with the product number "P001". The CO₂ emission amount about the product with the product number "P001" after the allotment reaches "1,132.41" (= 1,189.60 - 57.19) [tCO2]. Similarly, the allotment amount "-32.37" [tCO2] for the product with the product number "P002" is obtained, and the CO₂ emission amount about the product with the product number "P002" after the allotment reaches "640.9" (= 673.27 - 32.37) [tCO2]. The allotment amount "-43.36" [tCO2] for the product with the product number "P003" is obtained, and the CO₂ emission amount about the product with the product number "P003" after the allotment reaches "858.69" (= 902.05 - 43.36) [tCO2]. Consequently, the total product emission amount after the allotment reaches "2,632" (= 1,132.41 + 640.9 + 858.69) [tCO2] that agrees with the total plant emission amount.

The control part 41 then outputs respective calculation results of the calculation parts 42, 43, and 44a from the output part 2. For example, in a case where the output part 2 is in the form of a display device, the display device displays the calculation results of the calculation parts 42, 43, and 44a on a screen of the device. Alternatively, for example, in a case where the output part 2 is in the form of a printing device, the printing device prints out the calculation results of the calculation parts 42, 43, and 44a as a report. For instance, the table shown in each of Fig. 9A, Fig. 9B, Fig. 9C, and Fig. 12 is output in the form of a display screen image or a report.

The control part 41 may output the calculation results of the calculation parts 42, 43, and 44a to an external device via the IF part 3, if necessary.

The input part 1, the output part 2, the IF part 3, the control processor 4a, and the storage part 5 in the carbon dioxide emission amount calculation apparatus S serving as one example of the carbon dioxide emission amount calculation system are configurable by, for example, a desktop computer, a lap-top computer, or a tablet computer. Of course, the carbon dioxide emission amount calculation system may be configured by a plurality of computers communicably connected to each other as described above.

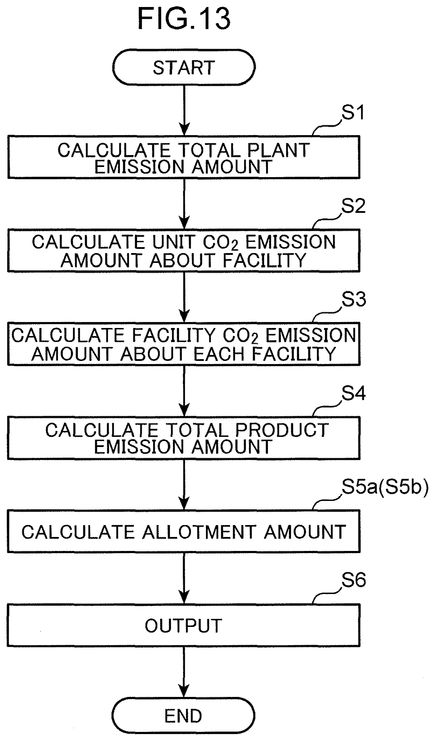

Next, an operation in the embodiment will be described. Fig. 13 is a flowchart showing an operation of the carbon dioxide emission amount calculation system (the carbon dioxide emission amount calculation apparatus serving as one example of the system).

The carbon dioxide emission amount calculation apparatus S having this configuration is powered on to execute initialization of each part which is necessary and start an operation of each part. The control processor 4a enables the control part 41, the total plant emission amount calculation part 42, the total product emission amount calculation part 43, and the allotment calculation part 44 to be operative in response to the control processing programs. The total product emission amount calculation part 43 operatively includes the facility unit emission amount calculation section 431, the facility emission amount calculation section 432, and the total amount calculation section 433.

In Fig. 13, the carbon dioxide emission amount calculation apparatus S firstly makes the total plant emission amount calculation part 42 of the control processor 4a calculate a total plant emission amount (S1). In the embodiment, the total plant emission amount is calculated by further incorporating the first total of CO₂ emission amounts about a raw material used in a plant in a predetermined period.

Subsequently, the carbon dioxide emission amount calculation apparatus S makes the facility unit emission amount calculation section 431 in the total product emission amount calculation part 43 of the control processor 4a calculate, for each of a plurality of facilities respectively associated with a plurality of steps in production of a product completed in the predetermined period, the first unit CO₂ emission amount per unit about the facility (S2).

Then, the carbon dioxide emission amount calculation apparatus S further makes the facility emission amount calculation section 432 in the total product emission amount calculation part 43 of the control processor 4 calculate, for each of the facilities associated with the steps in the production of the product completed in the predetermined period, a facility CO₂ emission amount about the facility in connection with the production of the product completed in the predetermined period (S3).

The carbon dioxide emission amount calculation apparatus S further makes the total amount calculation section 433 in the total product emission amount calculation part 43 of the control processor 4a calculate, as the total product emission amount, a sum total of each facility CO₂ emission amount about each of the facilities calculated by the facility emission amount calculation section 432 for each of the facilities respectively associated with the steps in the production of the product completed in the predetermined period (S4). In the embodiment, the total product emission amount is calculated by further incorporating the third total of CO₂ emission amounts about the raw material in connection with the production of the product completed in the predetermined period.

Next, the carbon dioxide emission amount calculation apparatus S makes the allotment calculation part 44a of the control processor 4a calculate a difference amount indicating a difference between the total plant emission amount calculated by the total plant emission amount calculation part 42 in step S1 and the total product emission amount calculated by the total product emission amount calculation part 43 in step S4, and allots the calculated difference amount to each type of the product through allotment of the calculated difference amount to be an allotment amount for each type of the product at a CO₂ emission amount ratio per each type of the product (S5a).

Finally, the carbon dioxide emission amount calculation apparatus S makes the control part 41 of the control processor 4 control the output part 2 to output calculation results (step S6) therefrom, and finishes the operation.

As described heretofore, each of the carbon dioxide emission amount calculation system (the carbon dioxide emission amount calculation apparatus serving as an example of the system) S, and the carbon dioxide emission amount calculation method and the carbon dioxide emission amount calculation program for the system in the embodiment enables allotment of a difference amount indicating a difference between the total plant emission amount and the total product emission amount at a predetermined proportion to each type of product, and thus allows the total plant emission amount and the total product emission amount after the allotment to agree with each other. In other words, each of the carbon dioxide emission amount calculation system (the carbon dioxide emission amount calculation apparatus) S, the carbon dioxide emission amount calculation method, and the carbon dioxide emission amount calculation program allows the total carbon dioxide emission amount about all products completed in the predetermined period to agree with the total carbon dioxide emission amount in the whole of the plant in the predetermined period.

Each of the carbon dioxide emission amount calculation system (carbon dioxide emission amount calculation apparatus) S, the carbon dioxide emission amount calculation method, and the carbon dioxide emission amount calculation program enables allotment of the difference amount to each type of product, and allows the difference amount to be equal to a total per-product type CO₂ emission amount.

Each of the carbon dioxide emission amount calculation system (the carbon dioxide emission amount calculation apparatus) S, the carbon dioxide emission amount calculation method, and the carbon dioxide emission amount calculation program enables calculation of the total plant emission amount by further incorporating the first total of CO₂ emission amounts about the raw material used in the plant in the predetermined period, and calculation of the total product emission amount by further incorporating the third total of CO₂ emission amounts about the raw material in connection with the production of the product completed in the predetermined period. Each of the system, the method and, the program hence enables further incorporation of such a CO₂ emission amount that cannot be associated with any facility.

The carbon dioxide emission amount calculation system (the carbon dioxide emission amount calculation apparatus serving as an example of the system) S is configured to include the allotment calculation part 44a to allot the calculated difference amount at a predetermined proportion to each type of the product, but may be configured to include an allotment calculation part 44b to allot the calculated difference amount at a predetermined proportion to each facility of the plant (modification). Each of the carbon dioxide emission amount calculation system (the carbon dioxide emission amount calculation apparatus) S having this configuration, the relevant carbon dioxide emission amount calculation method, and the relevant carbon dioxide emission amount calculation program enables allotment of the difference amount to each facility in the plant, and allows the difference amount to be equal to the total per-facility CO₂ emission amount.

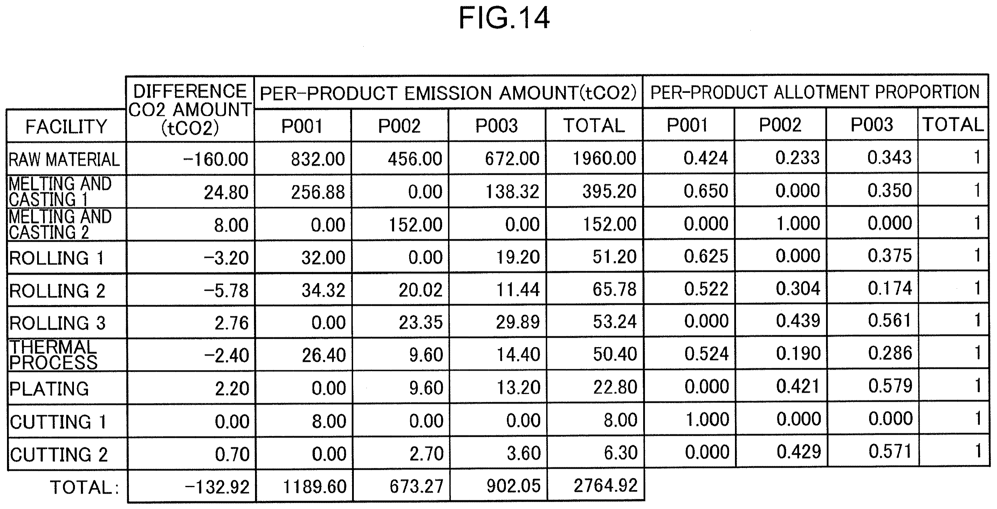

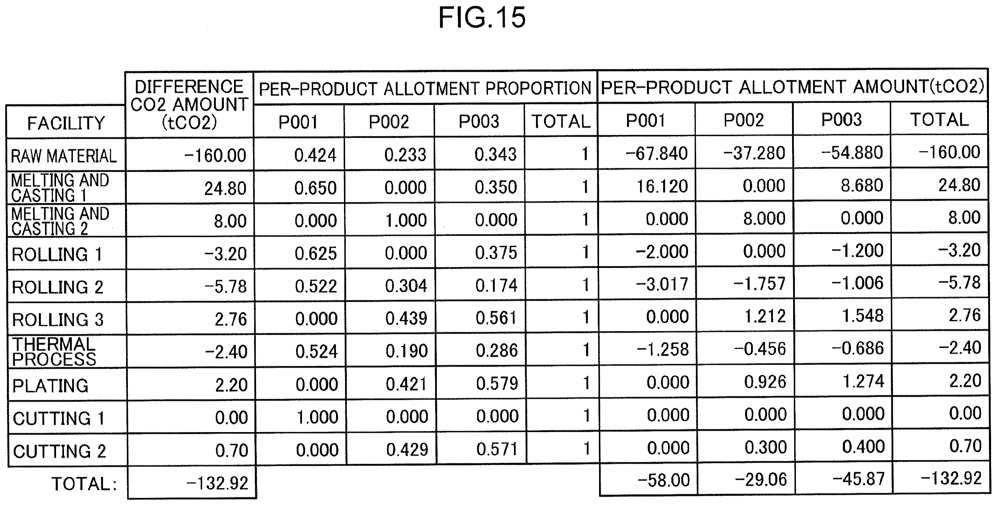

Fig. 14 illustrates an example table for explanation of a calculation way of allotting a difference amount to each facility in a plant at a CO₂ emission amount ratio per type of product. Fig. 15 illustrates an example table for explanation of a calculation way of allotting a difference amount to each facility in a plant.

Such a carbon dioxide emission amount calculation system (a carbon dioxide emission amount calculation apparatus serving as one example of the system) S in the modification includes, for example, an input part 1, an output part 2, an interface part 3, a control processor 4b, and a storage part 5 as illustrated in Fig. 1. The input part 1, the output part 2, the IF part 3, and the storage part 5 in the carbon dioxide emission amount calculation apparatus S in the modification are respectively the same as or similar to the input part 1, the output part 2, the IF part 3, and the storage part 5 in the carbon dioxide emission amount calculation apparatus S in the embodiment, and thus, the description for these parts is omitted. The control processor 4b operatively includes a control part 41, a total plant emission amount calculation part 42, a total product emission amount calculation part 43, and the allotment calculation part 44b. The control part 41, the total plant emission amount calculation part 42, and the total product emission amount calculation part 43 of the control processor 4b in the modification are respectively same as or similar to the control part 41, the total plant emission amount calculation part 42, and the total product emission amount calculation part 43 in the embodiment, and thus, the description for these parts is omitted.

The allotment calculation part 44b calculates, as a facility difference amount, the difference between the total plant emission amount calculated by the total plant emission amount calculation part 42 and the total product emission amount calculated by the total product emission amount calculation part 43 for each of facilities in the plant, and allots, for each of the facilities in the plant, the calculated difference amount at the predetermined proportion to each of the facilities in the plant through allotment of the calculated difference amount at a CO₂ emission amount ratio per type of the product in the facility.

Specifically, the allotment calculation part 44b firstly calculates, as the facility difference amount, a difference between a total plant emission amount calculated by the total plant emission amount calculation part 42 and a total product emission amount calculated by the total product emission amount calculation part 43. In the aforementioned example, a facility difference amount calculated for each facility as shown in the column "DIFFERENCE CO₂ AMOUNT (A - B)" in Fig. 11.

Subsequently, the allotment calculation part 44b calculates, for each of the facilities in the plant, a CO₂ emission amount ratio per type of the product for each product completed in the predetermined period in the facility. For instance, a per-product emission amount [tCO2] shown in Fig. 14 is calculated from respective step CO₂ emission amounts (respective facility CO₂ emission amounts) about each type of product shown in Fig. 9. For instance, the following amounts are obtained: the CO₂ emission amount "32" [tCO2] about the facility with the facility name "rolling 1" for the product with the product number "P001" from 9A; the CO₂ emission amount "0" [tCO2] about the facility with the facility name "rolling 1" for the product with the product number "P002" from Fig. 9B; and the CO₂ emission amount "19.2" [tCO2] about the facility with the facility name "rolling 1" for the product with the product number "P003" from Fig. 9C. These obtained emission amounts are described in the column "PER-PRODUCT EMISSION AMOUNT [tCO2]" in Fig. 14. Regarding the facility with the facility name "rolling 1", the total facility CO₂ emission amount (step CO₂ emission amount) "51.2" (= 32 + 19.2) [tCO2] is obtained, and the obtained amount is divided by the CO₂ emission amount "32" about the product with the product number "P001 to obtain the CO₂ emission amount ratio "0.625" (= 32/51.2) for the product with the product number "P001". Similarly, the CO₂ emission amount ratio for the product number "P002" is obtained as "0" (= 0/51.2). The CO₂ emission amount ratio for the product with the product number "P003" is obtained as "0.375 (= 19.2/51.2). Each CO₂ emission amount ratio is shown in the column "PER-PRODUCT ALLOTMENT PROPORTION" in each of Fig. 14 and Fig. 15.

Subsequently, the allotment calculation part 44b calculates, for each of the facilities in the plant, an allotment amount of the product in the facility by multiplying a facility difference amount of the facility by a CO₂ emission amount ratio per type of product about the facility for each product completed in the predetermined period, and incorporates the calculated allotment amount for the product about the facility. For instance, regarding the facility with the facility name "rolling 1", the CO₂ emission amount ratio "0.625" for the product with the product number "P001" is multiplied by the facility difference amount "-3.2" to thereby obtain the allotment amount "-2" [tCO2] for the product with the product number "P001", and the obtained allotment amount is added to the CO₂ emission amount "32" [tCO2] about the product with the product number "P001". The CO₂ emission amount about the product with the product number "P001" for the facility name "rolling 1" after allotment reaches "30" (= 32 - 2) [tCO2]. Similarly, regarding the facility with the facility name "rolling 1", the allotment amount "-1.2" [tCO2] for the product with the product number "P003" is obtained, and the CO₂ emission amount about the product with the product number "P003" for the facility name "rolling 1" after the allotment reaches "18" (= 19.2 - 1.2) [tCO2]. Therefore, regarding the facility with the facility name "rolling 1", the total product emission amount after the allotment reaches "48" (= 30 + 12) [tCO2], and agrees with the total plant emission amount.

In the modification, in the same manner as in the embodiment, the total plant emission amount calculation part 42 calculates the total plant emission amount by incorporating at least one of a first total of CO₂ emission amounts about a raw material used in the plant in the predetermined period and a second total of CO₂ emission amounts emitted in the predetermined period in a predetermined process executed in association with the product. The total product emission amount calculation part 43 may further calculate: the total product emission amount by further incorporating a third total of CO₂ emission amounts about the raw material in connection with the production of the product completed in the predetermined period when the total plant emission amount calculation part 42 calculates the total plant emission amount by incorporating the first total; the total product emission amount by further incorporating a fourth total of CO₂ emission amounts emitted in the predetermined period in the predetermined process executed in association with the product completed in the predetermined period when the total plant emission amount calculation part 42 calculates the total plant emission amount by incorporating the second total; or the total product emission amount by further incorporating the third total and the fourth total when the total plant emission amount calculation part 42 calculates the total plant emission amount by incorporating the first total and the second total.

For instance, each of Fig. 14 and Fig. 15 shows an example where the total plant emission amount further incorporates the first total, and the total product emission amount further incorporates the third total. In each example, regarding the raw material, the raw material difference amount corresponding to the facility difference amount indicates "-160" [tCO2]. Further, the CO₂ emission amount ratio for the product with the product number "P001" is "0.424" (= 832/1,960), and the relevant allotment amount reaches "-67.84" [tCO2]. The CO₂ emission amount ratio for the product with the product number "P002" is "0.233" (= 456/1,960), and the relevant allotment amount reaches "-37.28" [tCO2]. The CO₂ emission amount ratio for the product with the product number "P003" is "0.343" (= 672/1,960), and the relevant allotment amount reaches "-54.88" [tCO2]. Regarding the raw material, the CO₂ emission amount about the product with the product number "P001" after allotment reaches "764.16" (= 832 - 67.84) [tCO2], the CO₂ emission amount about the product with the product number "P002" after allotment reaches "418.72" (= 456 - 37.28) [tCO2], and the CO₂ emission amount about the product with the product number "P001" after allotment reaches "617.12" (= 672 - 54.88) [tCO2]. Consequently, regarding the raw material, the total product emission amount after the allotment reaches "1,800" (= 764.16 + 418.72 + 617.12) [tCO2] that agrees with the total plant emission amount.

In Fig. 15, a per-product allotment amount is expressed with a numeric value rounded off at the fourth decimal place.

The carbon dioxide emission amount calculation system (the carbon dioxide emission amount calculation apparatus serving as one example of the system) S in the modification sequentially executes steps S1 to S4 as shown in Fig. 13 in the same manner as described above, and subsequently, executes step S5b in place of step S5a. In step S5b, the carbon dioxide emission amount calculation apparatus S makes the allotment calculation part 44b of the control processor 4b calculate, as a facility difference amount, a difference between the total plant emission amount calculated by the total plant emission amount calculation part 42 in step S1 and the total product emission amount calculated by the total product emission amount calculation part 43 in step S4 for each of the facilities in the plant, and allots, for each of the facilities in the plant, the calculated difference amount at a predetermined proportion to each of the facilities in the plant through allotment of the calculated difference amount at a CO₂ emission amount ratio per type of the product in the facility. Finally, step S6 is executed, and the operation is finished.

In the described example in each of the embodiment and the modification, the total plant emission amount further incorporates the first total, and the total product emission amount further incorporates the third total. The total plant emission amount may further incorporate, in place of or in addition to the first total, the second total of CO₂ emission amounts emitted in the predetermined period in the predetermined process executed in association with the product. The total product emission amount may further incorporate, in place of or in addition to the third total, the fourth total of CO₂ emission amounts emitted in the predetermined period in the predetermined process executed in association with the product completed in the predetermined period.

The predetermined process executed in association with the product may be a process, for example, executed to the product after production of the product to delivery of the product to a delivery destination. Specifically, the predetermined process is a wrapping process of wrapping the product, a transport process of transporting the product from the plant to the delivery destination, or other process. The second total of CO₂ emission amounts is calculated by multiplying a load to the predetermined process in the predetermined period by a unit CO₂ emission amount per unit (fourth unit CO₂ emission amount per unit) in the predetermined process. The fourth total of CO₂ emission amounts is calculated by multiplying a load to the product completed in the predetermined period by the fourth unit CO₂ emission amount per unit. For instance, in a case where the predetermined process indicates the wrapping process, the second total of CO₂ emission amounts is calculated by multiplying a total wrapping material amount used in the predetermined period by the fourth unit CO₂ emission amount (wrapping material unit CO₂ emission amount) per unit about the wrapping material, and the fourth total of CO₂ emission amounts is calculated by multiplying a total wrapping material amount used in the product completed in the predetermined period by the wrapping material unit CO₂ emission amount. Alternatively, for instance, in a case where the predetermined process indicates the transport process and, for example, CO₂ emission amounts depend on a transport distance, the second total of CO₂ emission amounts is calculated by multiplying a total transport distance about the transport process in the predetermined period by the fourth unit CO₂ emission amount (transport processing unit CO₂ emission amount) per unit about the transport process, and the fourth total of CO₂ emission amounts is calculated by multiplying a total transport distance about the transport process for the product completed in the predetermined period by the transport processing unit CO₂ emission amount.

Various aspects of technologies are disclosed in this specification as described above. Main technologies among them will be summarized below.

A carbon dioxide emission amount calculation system according to an aspect calculates CO₂ emission amounts in a plant including a plurality of facilities and configured to produce a product of a plurality of types through a plurality of steps. The carbon dioxide emission amount calculation system includes: a total plant emission amount calculation part that calculates, as a total plant emission amount, a total CO₂ emission amount emitted in the plant in a predetermined period; a total product emission amount calculation part that calculates, as a total product emission amount, a total CO₂ emission amount emitted in the predetermined period in connection with production of the product completed in the predetermined period; and an allotment calculation part that calculates, as a difference amount, a difference between the total plant emission amount calculated by the total plant emission amount calculation part and the total product emission amount calculated by the total product emission amount calculation part, and allots the calculated difference amount at a predetermined proportion to each type of the product or each of the facilities in the plant. Preferably, in the carbon dioxide emission amount calculation system, the total plant emission amount calculation part calculates, as a per-facility emission amount for each of the facilities, a CO₂ emission amount emitted in the predetermined period in use of the facility, and calculates the total plant emission amount by calculating a sum total of a plurality of per-facility emission amounts as calculated. Preferably, in the carbon dioxide emission amount calculation system, the total product emission amount calculation part includes: a facility unit emission amount calculation section that calculates, for each of the facilities respectively associated with the steps in the production of the product completed in the predetermined period, a unit CO₂ emission amount per unit about each of the facilities on the basis of a total production load amount required in the facility associated with the step to execute the step in the production in the predetermined period and a total CO₂ emission amount about the facility with respect to the total production load amount; a facility emission amount calculation section that calculates, for each of the facilities respectively associated with the steps in the production of the product completed in the predetermined period, a facility CO₂ emission amount about the facility in connection with the production of the product completed in the predetermined period on the basis of the unit CO₂ emission amount per unit about the facility calculated by the facility unit emission amount calculation section and the total production load amount required in the facility in the production in the predetermined period in connection with the production of the product completed in the predetermined period; and a total amount calculation section that calculates, as the total product emission amount, a sum total of each facility CO₂ emission amount about each of the facilities calculated by the facility emission amount calculation section for each of the facilities respectively associated with the steps in the production of the product completed in the predetermined period.

The carbon dioxide emission amount calculation system having this configuration allots the difference amount indicating a difference between the total plant emission amount and the total product emission amount at a predetermined proportion to each type of the product or each facility in the plant, and thus allows the total plant emission amount and the total product emission amount after the allotment to agree with each other. In other words, the carbon dioxide emission amount calculation system allows the total carbon dioxide emission amount about all products completed in the predetermined period to agree with the total carbon dioxide emission amount in the whole of the plant in the predetermined period.

In another aspect, in the carbon dioxide emission amount calculation system, the allotment calculation part allots the calculated difference amount at the predetermined proportion to each type of the product through allotment of the calculated difference amount at a CO₂ emission amount ratio per type of the product.

The carbon dioxide emission amount calculation system having this configuration enables allotment of the difference amount for each type of the product, and allows the difference amount to be equal to a total per-product type CO₂ emission amount.

In another aspect, in the carbon dioxide emission amount calculation system, the allotment calculation part calculates, as a facility difference amount, the difference between the total plant emission amount calculated by the total plant emission amount calculation part and the total product emission amount calculated by the total product emission amount calculation part, and allots, for each of the facilities in the plant, the calculated difference amount at the predetermined proportion to each of the facilities in the plant through allotment of the calculated difference amount at a CO₂ emission amount ratio per type of the product in the facility.

The carbon dioxide emission amount calculation system having this configuration enables allotment of the difference amount for each facility in the plant, and allows the difference amount to be equal to a total per-facility CO₂ emission amount.

In another aspect, in the carbon dioxide emission amount calculation system, the total plant emission amount calculation part calculates the total plant emission amount by incorporating at least one of a first total of CO₂ emission amounts about a raw material used in the plant in the predetermined period and a second total of CO₂ emission amounts emitted in the predetermined period in a predetermined process executed in association with the product. The total product emission amount calculation part calculates: the total product emission amount by further incorporating a third total of CO₂ emission amounts about the raw material in connection with the production of the product completed in the predetermined period when the total plant emission amount calculation part calculates the total plant emission amount by incorporating the first total; the total product emission amount by further incorporating a fourth total of CO₂ emission amounts emitted in the predetermined period in the predetermined process executed in association with the product completed in the predetermined period when the total plant emission amount calculation part calculates the total plant emission amount by incorporating the second total; or the total product emission amount by further incorporating the third total and the fourth total when the total plant emission amount calculation part calculates the total plant emission amount by incorporating the first total and the second total.

The carbon dioxide emission amount calculation system having this configuration enables incorporation of such a CO₂ emission amount that cannot be associated with any facility.

A carbon dioxide emission amount calculation method according to another aspect includes calculating CO₂ emission amounts in a plant including a plurality of facilities and configured to produce a product of a plurality of types through a plurality of steps. The carbon dioxide emission amount calculation method includes: a total plant emission amount calculation step of calculating, as a total plant emission amount, a total CO₂ emission amount emitted in a predetermined period; a total product emission amount calculation step of calculating, as a total product emission amount, a total CO₂ emission amount emitted in the predetermined period in connection with production of the product completed in the predetermined period; and an allotment calculation step of calculating, as a difference amount, a difference between the total plant emission amount calculated in the total plant emission amount calculation step and the total product emission amount calculated in the total product emission amount calculation step, and allots the calculated difference amount at a predetermined proportion to each type of the product or each of the facilities.

A carbon dioxide emission amount calculation program according to another aspect is a program for calculating CO₂ emission amounts in a plant including a plurality of facilities and configured to produce a product of a plurality of types through a plurality of steps. The program causes a computer to serve as the carbon dioxide emission amount calculation system. The carbon dioxide emission amount calculation program is recorded in a computer-readable-recoding medium so as to be provided.

Each of the carbon dioxide emission amount calculation method and the carbon dioxide emission amount calculation program includes allotting a difference amount indicating a difference between the total plant emission amount and the total product emission amount at a predetermined proportion to each type of the product or each facility in the plant, and thus allows the total plant emission amount and the total product emission amount to agree with each other. In other words, each of the carbon dioxide emission amount calculation method and the program allows the total carbon dioxide emission amount about all products completed in the predetermined period to agree with the total carbon dioxide emission amount in the whole of the plant in the predetermined period.

This application is based on Japanese Patent Application No. 2023-32912 field in Japan Patent Office on March 3, 2023, and includes contents thereof.

Although the present invention has been fully described by way of the embodiments and examples with reference to the above-described specific examples, it is to be understood that various changes and/or modifications to the embodiments and examples will be apparent to those skilled in the art. Therefore, unless otherwise such changes and modifications to be made by those skilled in the art depart from the scope of the present invention hereinafter defined, they should be construed as being included therein.

### Industrial Applicability

The present invention provides a carbon dioxide emission amount calculation system, a carbon dioxide emission amount calculation method, and a recording medium storing a carbon dioxide emission amount calculation program, to each calculate carbon dioxide emission amounts.

## Claims

1. A carbon dioxide emission amount calculation system that calculates CO₂ emission amounts in a plant including a plurality of facilities and configured to produce a product of a plurality of types through a plurality of steps, the carbon dioxide emission amount calculation system comprising:
a total plant emission amount calculation part that calculates, as a total plant emission amount, a total CO₂ emission amount emitted in the plant in a predetermined period;
a total product emission amount calculation part that calculates, as a total product emission amount, a total CO₂ emission amount emitted in the predetermined period in connection with production of the product completed in the predetermined period; and
an allotment calculation part that calculates, as a difference amount, a difference between the total plant emission amount calculated by the total plant emission amount calculation part and the total product emission amount calculated by the total product emission amount calculation part, and allots the calculated difference amount at a predetermined proportion to each type of the product or each of the facilities in the plant.

2. The carbon dioxide emission amount calculation system according to claim 1, wherein the allotment calculation part allots the calculated difference amount at the predetermined proportion to each type of the product through allotment of the calculated difference amount at a CO₂ emission amount ratio per type of the product.

3. The carbon dioxide emission amount calculation system according to claim 1, wherein the allotment calculation part calculates, as a facility difference amount, the difference between the total plant emission amount calculated by the total plant emission amount calculation part and the total product emission amount calculated by the total product emission amount calculation part, and allots, for each of the facilities in the plant, the calculated difference amount at the predetermined proportion to each of the facilities in the plant through allotment of the calculated difference amount at a CO2 emission amount ratio per type of the product in the facility.

4. The carbon dioxide emission amount calculation system according to claim 1, wherein the total plant emission amount calculation part calculates the total plant emission amount by incorporating at least one of a first total of CO₂ emission amounts about a raw material used in the plant in the predetermined period and a second total of CO₂ emission amounts emitted in the predetermined period in a predetermined process executed in association with the product, and
the total product emission amount calculation part calculates:
the total product emission amount by further incorporating a third total of CO₂ emission amounts about the raw material in connection with the production of the product completed in the predetermined period when the total plant emission amount calculation part calculates the total plant emission amount by incorporating the first total;
the total product emission amount by further incorporating a fourth total of CO₂ emission amounts emitted in the predetermined period in the predetermined process executed in association with the product completed in the predetermined period when the total plant emission amount calculation part calculates the total plant emission amount by incorporating the second total; or
the total product emission amount by further incorporating the third total and the fourth total when the total plant emission amount calculation part calculates the total plant emission amount by incorporating the first total and the second total.

5. A carbon dioxide emission amount calculation method of calculating CO₂ emission amounts in a plant including a plurality of facilities and configured to produce a product of a plurality of types through a plurality of steps, the carbon dioxide emission amount calculation method comprising:
a total plant emission amount calculation step of calculating, as a total plant emission amount, a total CO₂ emission amount emitted in a predetermined period;
a total product emission amount calculation step of calculating, as a total product emission amount, a total CO₂ emission amount emitted in the predetermined period in connection with production of the product completed in the predetermined period; and
an allotment calculation step of calculating, as a difference amount, a difference between the total plant emission amount calculated in the total plant emission amount calculation step and the total product emission amount calculated in the total product emission amount calculation step, and allotting the calculated difference amount at a predetermined proportion to each type of the product or each of the facilities.

6. A non-transitory computer-readable recording medium recording a carbon dioxide emission amount calculation program for calculating CO₂ emission amounts in a plant including a plurality of facilities and configured to produce a product of a plurality of types through a plurality of steps, the carbon dioxide emission amount calculation program in the non-transitory computer-readable storage medium causing a computer to execute processing comprising:
serving as the carbon dioxide emission amount calculation system according to any one of claims 1 to 4.
